Europäisches Patentamt

European Patent Office

Office européen des brevets

(11) Publication number: **0 321 153**
**A2**

# EUROPEAN PATENT APPLICATION

(21) Application number: 88311660.0

(51) Int. Cl.⁴: **H04B 1/58**

(22) Date of filing: 09.12.88

(30) Priority: 16.12.87 JP 315994/87

(43) Date of publication of application:
21.06.89 Bulletin 89/25

(84) Designated Contracting States:
AT BE CH DE ES FR GB GR IT LI NL SE

(71) Applicant: **Kabushiki Kaisha Myukomu**
**1, Kita-4jo-nishi 4-chome Chuo-ku**
**Sapporo-shi Hokkaido(JP)**

(72) Inventor: **Kuroda, Kiyoshi**
**1, Kita-4jo-nishi 4-chome Chuo-ku**
**Sapporo-shi Hokkaido(JP)**

(74) Representative: **Muir, Ian R. et al**
**HASELTINE LAKE & CO. Hazlitt House 28**
**Southampton Buildings Chancery Lane**
**London WC2A 1AT(GB)**

(54) **Cancelling circuit and transmission system.**

(57) The present invention is a transmission system in which there are provided a bridge circuit in which a balanced condition is provided in an entire frequency band usable for a wire transmission line or a portion thereof, and a cancelling circuit in which a simultaneous two-directional communication is enabled by using the same frequency or the frequency adjacent thereto, and there are provided said cancelling circuits at both terminal devices opposite to each other through a transmission line, thereby enabling said simultaneous two-directional communication.

## FIG. 2

## Cancelling Circuit and Transmission System

### FIELD OF THE INVENTION AND RELATED ART STATEMENT

The present invention relates to a cancelling circuit and a transmission system using the cancelling circuit in a communication of a television telephone in wire or wireless system, MODEM and the like.

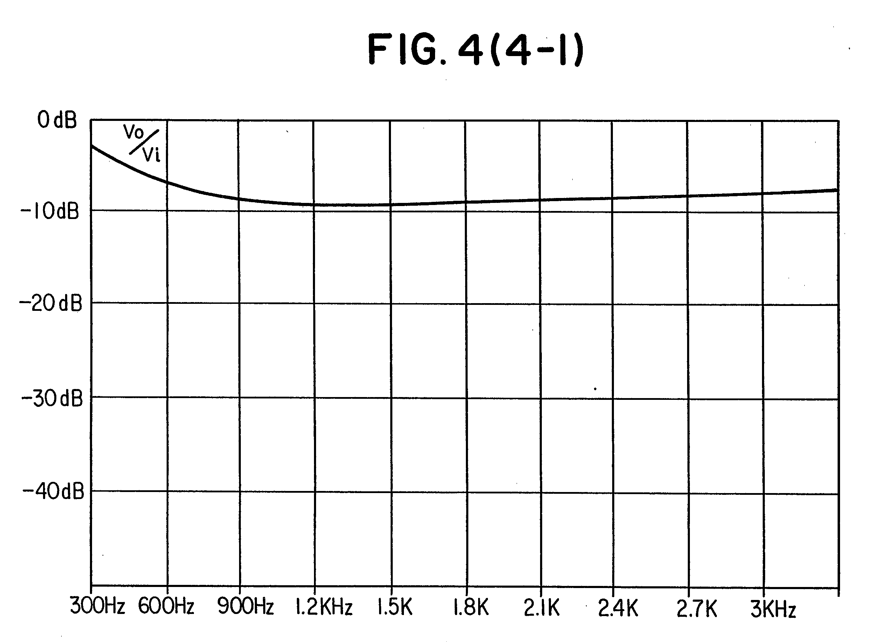

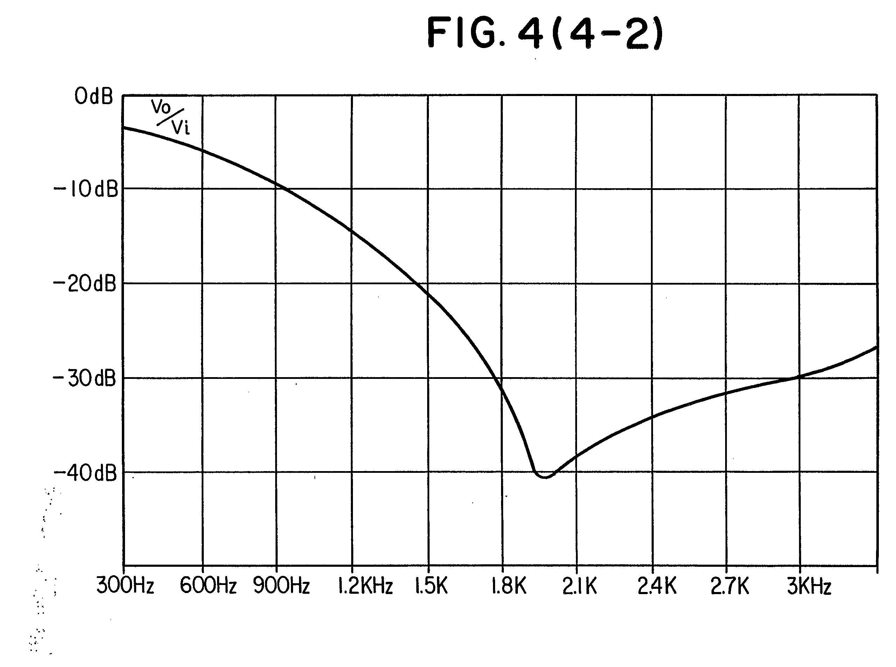

It is general for conventional terminal devices such as telephone and MODEM to adapt a communication system in which a simultaneous two-directional communication is effected by using only one transmission line. It is necessary for the simultaneous two-directional communication to discriminate a transmitting signal from a receiving signal. If the ability for discriminating them (crosstalk characteristics) is low, the telephone generates howling and MODEM or the like increases error. Then, there has been used a hybrid circuit (hereinafter referred to simply as HYB) in the telephone and MODEM to effect the discrimination of the transmission and reception signals. The crosstalk characteristic in the case of using a general HYB circuit is within the degree as shown in the graph of Fig. 4 (4-1). Therefore, the HYB circuit achieves a sufficient performance in the case of the telephone having a purpose of telephone call, however it was impossible for the television telephone and MODEM or the like having a purpose of the data communication such as image and character except the telephone call to effect the simultaneous two-directional communication for data with the same carrier frequency by using the HYB. For example, there is the telephone set called as "memo telephone set" capable of transmitting image and characters with telephone call. Though the telephone set can achieve the two-directional communication for the telephone call simultaneously, image and characters are merely transmitted only in one-direction.

Under the circumstance, there has been provided the simultaneous two-directional communication of image and character data in order to obtain the necessary discrimination ability (crosstalk characteristics) by using a frequency division communication system for modulating the reception signal and the transmission signal by using respectively different carrier waves thereby converting them into respectively different frequencies, together with the above-mentioned HYB circuit.

The frequency division communication system has insufficient efficiency of a transmission line. If it becomes possible to effect the simultaneous two-directional communication of both image and character with the same carrier frequency, it is possible to use frequency bands which have not been used, for other transmission of audio i.e. sound and data signals thereby resulting a communication with good efficiency.

### OBJECT AND SUMMARY OF THE INVENTION

The object of the present invention is to use a transmission line used for effecting a communication with high efficiency.

Another object of the present invention is to achieve a simultaneous two-directional communication for the data of sound, image and character.

The cancelling circuit of the present invention is composed of a bridge circuit having a balanced condition in an entire frequency band or a portion of the frequency band of a wire transmission line, and the cancelling circuit makes possible a simultaneous two-directional communication of data such as sound, image and character by using the same frequency or the frequency adjacent thereto.

The cancelling circuit of the present invention has a bridge circuit including a frequency characteristic compensation circuit and a phase shifting circuit, and the bridge circuit compensates the influence due to the impedance change of the transmission line and the unbalanced condition due to the elements per se constituting the circuit, thereby obtaining a relative balanced condition.

According to the transmission system of the present invention, there are provided cancelling circuits in both terminal devices disposed at both ends of the transmission line, and the cancelling circuit is composed of the bridge circuit for providing a balanced condition in the entire frequency band or a portion of the frequency band in which the transmission is possible, thereby enabling the simultaneous two-directional communication of sound, image, character or the like in the same frequency or the adjacent frequency.

The features of the present invention will be understood in more detail from the following descriptions on the basis of the attached drawings.

### BRIEF DESCRIPTION OF THE DRAWINGS

Fig. 1 is a HYB circuit diagram generally used.

Fig. 2 is a block diagram showing a basic constitution of the present invention.

Fig. 3 is a view showing a specific example of the circuit of the present invention.

Fig. 4 (4-1) is a graph showing a crosstalk characteristic of HYB circuit generally used.

Fig. 4 (4-2) is a graph showing a crosstalk characteristic of HYB circuit of the present invention.

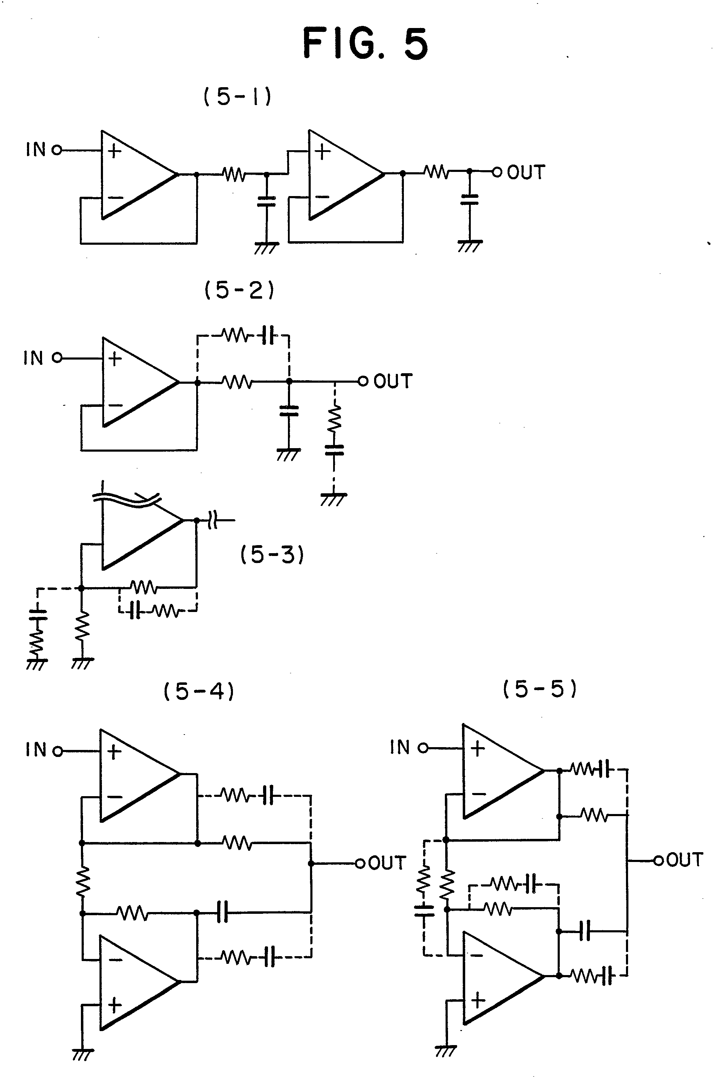

Figs. 5 (5-1) to (5-3) are views showing examples of frequency characteristic compensation circuits respectively.

Fig. 5 (5-4) is a view showing an example of a phase compensation circuit.

Fig. 5 (5-5) is a view showing an example circuit in which a frequency characteristic compensation and a phase compensation are effected.

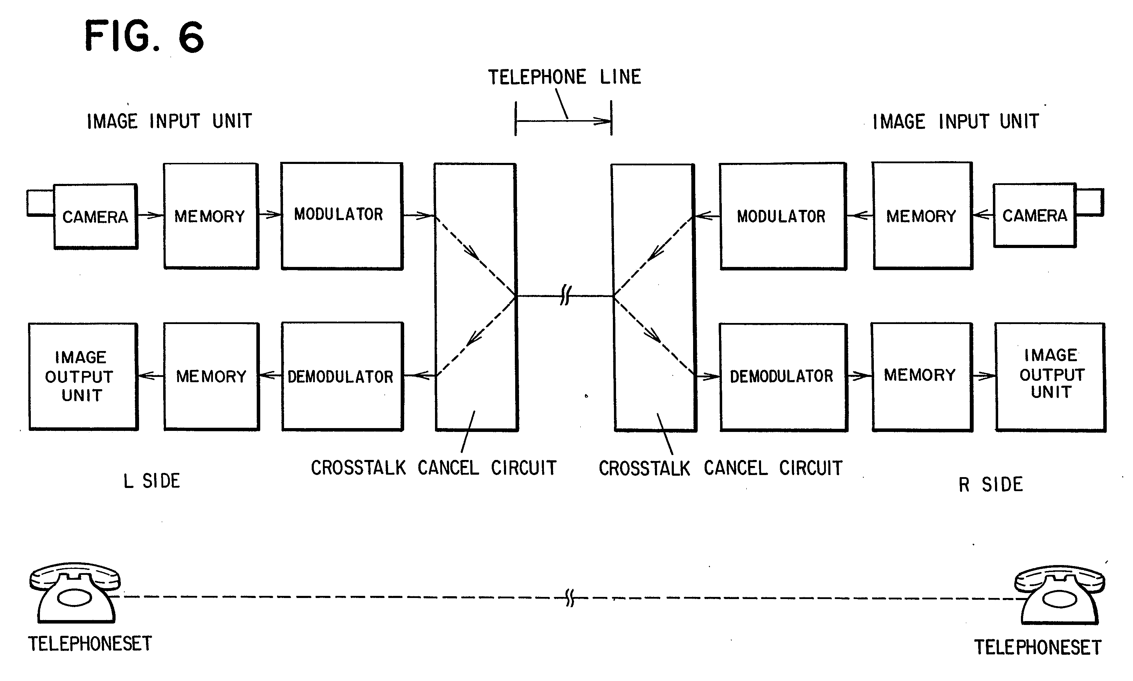

Figs. 6-10 are block diagrams showing embodiments of transmission system respectively.

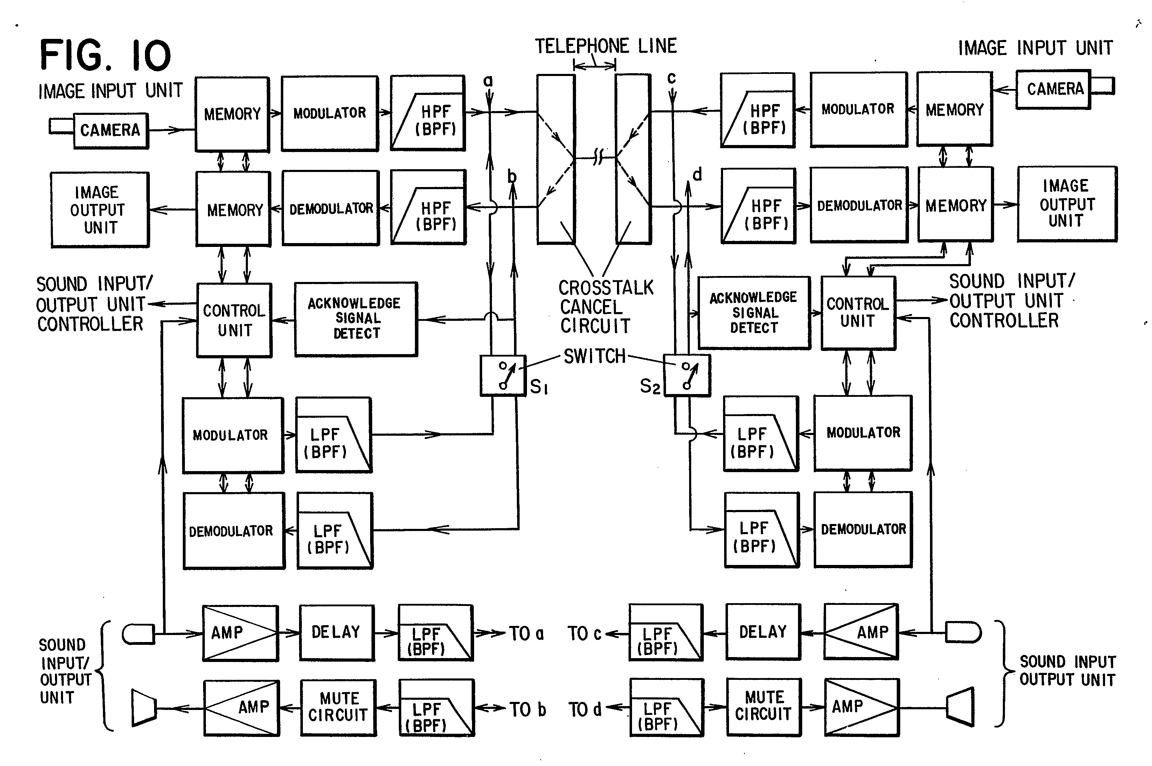

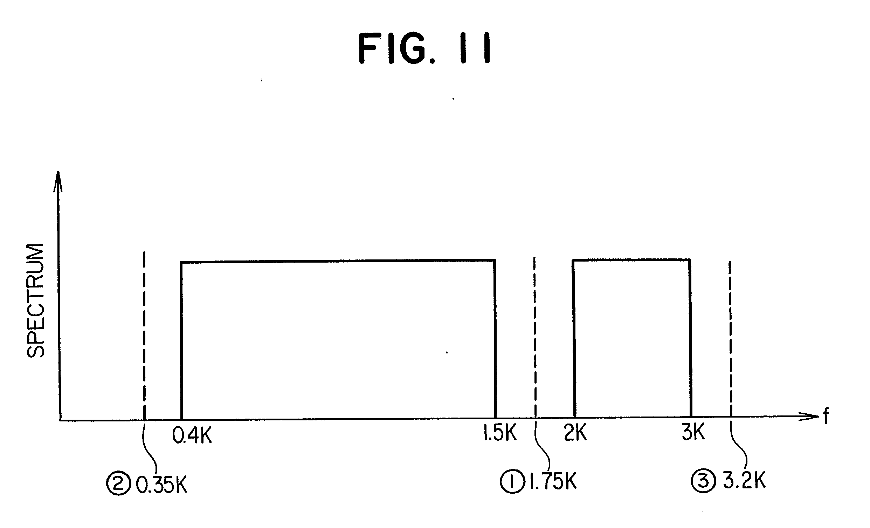

Fig. 11 is a view showing a spectrum in a method of multi-transmitting an acknowledge signal when the transmission system as shown in Fig. 10 is used.

DESCRIPTION OF THE PREFERRED EMBODIMENTS

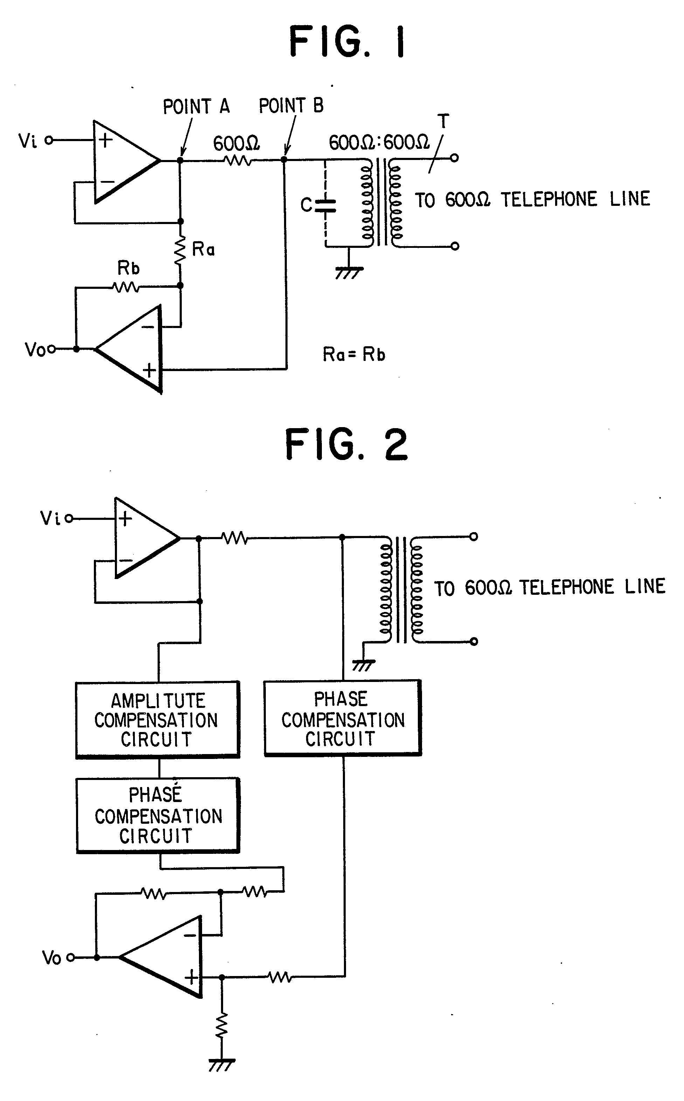

In order to provide better understanding of the present invention, a conventional HYB circuit will be explained hereinafter. Fig. 1 shows a conventional HYB circuit frequently used recently which is composed of a transformer and an operational amplifier. This HYB circuit composes a bridge circuit having a balanced condition achieved when the pure resistance of a telephone line is 600 Ω and the transformer is an ideal one with C = 0. At the balanced condition, the input signal inputted from Vi is not outputted to Vo. However, an actual impedance of the telephone line has not the pure resistance and further an actual transformer is also never ideal one, therefore the crosstalk characteristic obtained actually becomes at most that as shown in Fig. 4 (4-1). As is apparent from the figure, it is apparent that the usage of the HYB circuit is resulted in a difficulty of simultaneous transmission/reception of data by means of the same frequency, since about 1/3 (-10 dB) of the signal Vi is outputted from Vo as a reception signal.

It is considered that the balanced condition is hardly obtained greatly by the influence of the circuit elements per se (transformer, condenser C) used for the HYB circuit, though it is also the cause of making difficult the balanced condition that the transmission line has not the pure resistance of 600 Ω. The reason why the balanced condition is hardly obtained is that according to the general tuning circuit composed of a transformer and a condenser C, having a band pass effect for the purpose of eliminating noise or the like from the transmission line, there is caused an unbalanced condition due to a phase difference between the voltages at A and B points in the frequency except the resonance frequency.

Under the circumstance, it is the present invention to have improved the crosstalk characteristic. Namely, according to the present invention utilizing the HYB circuit as shown in Fig. 2, there is provided the balanced condition in the bridge circuit of the HYB circuit by making relatively zero the voltage and phase differences between the points A and B (Fig. 1), thereby obtaining an effect of improved crosstalk characteristics.

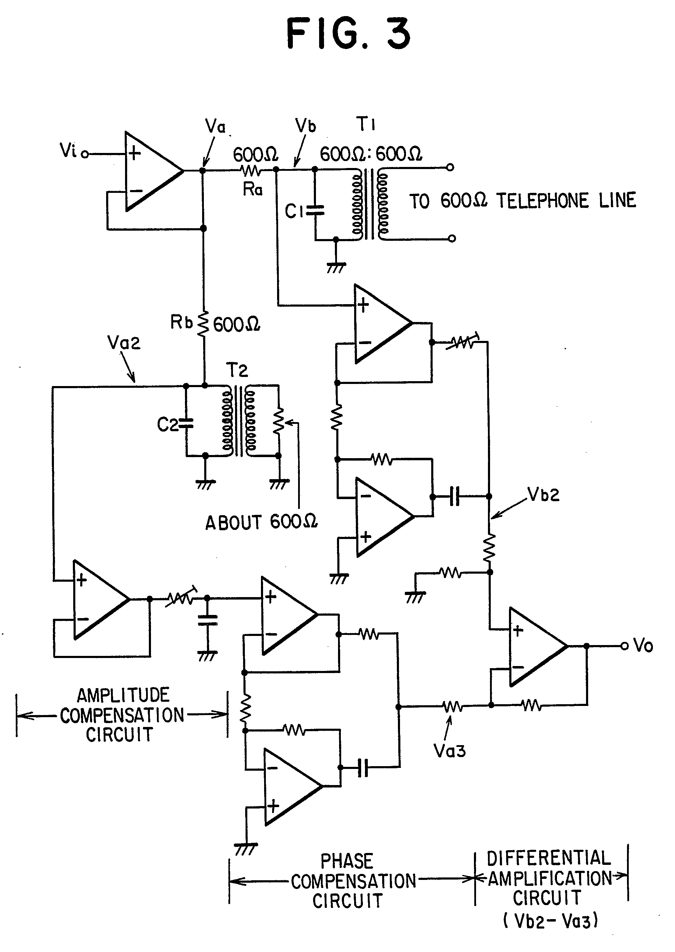

Fig. 3 shows a further circuit example.

This circuit example has a purpose to improve the crosstalk characteristics about at 2 - 3 KHz, and the improved characteristic is shown in Fig. 4 (4-2).

The circuit of Fig. 3 is explained hereinafter.

The bridge circuit is composed of a transformer T1, a condenser C1, a resister Ra, a transformer T2 connected with the resister 600 Ω as a load, a condenser C2, and a resister Rb. The transformers T1 and T2 have the same standard with each other, if C1 = C2 and Ra = Rb, the change in amplitude and phase due to these elements is relative, therefore the voltage Va2 is substantially equal to the voltage Vb. However, the transformer Tl is connected with the telephone line and the transformer T2 is connected with a pure resistance, therefore an error is undesirably generated between the voltages Va2 and Vb due to a substantial impedance change of the telephone line.

It may be possible to provide a bridge circuit in which the transformer T2 is connected with an element, as a load, having the same impedance change as the telephone line, however the present invention presents an equivalent bridge circuit in which the difference is made zero relatively by means of a compensation by using a high band amplitude compensating circuit and a phase shifting circuit. The voltages Vb2 and Va3 become Vb2 = Va3 when Vi is inputted thereby outputting no signal from the terminal Vo but to the telephone line. Furthermore, the transmitted signal from the telephone line outputs at Vb2 but not outputs at Va3, therefore the transmitted signal Vi can be discriminated from the received signal.

This circuit example is considered for application to the television telephone or the like, and it is possible to effect the simultaneously two-directional communication of an image signal with 2 KHz - 3.4 KHz out of the frequency band utilizable for transmission of telephone line by using the carrier frequency with the same as above frequency or the adjacent carrier frequency, and of a sound signal with 300 Hz - 2 KHz. Furthermore, the sound signal for the telephone call is transmitted by the band 300 Hz - 2 KHz. The circuit of Fig. 3 is used for the purpose mentioned above, therefore the compensation for the frequency band used for the sound signal is not effected, but the compensation for the frequency band for the image signal which greatly receives the influence due to the crosstalk characteristic is effected. Therefore, the characteristic is deteriorated below 2 KHz, as shown in the graph of Fig. 4 (4-2) but a good characteristic is obtained over more wider band by increasing the number of the circuits for compensating the amplitude and phase or the number of the elements for effecting the compensation as shown in Fig. 5. By this, it may be considered to apply an entire dual data communication using the same carrier frequency by a high speed MODEM or the like. In this case, the phase characteristic becomes important in accordance with a modulation type, then a good result may be obtained by passing the receiving signal Vo into the circuit having the phase characteristic reverse to the phase shifting circuit.

It may be considered that the element constant for compensating the amplitude and phase may be selected to a fixed type, a semi-fixed type, and an automatically balancing type in accordance with a required performance. If the element constant is the automatically balancing type, the amplitude and phase of Vb2 and Va3 are detected and controlled such that both become coincident with each other.

Some examples of transmitting system made possible by utilizing the circuit of the present invention will be explained hereinafter.

Fig. 6 shows an example of a simultaneous two-directional communication of image data by using one telephone line. The example as shown in Fig. 6 has the following advantages in comparison with the semi-dual transmission system used in general. According to the example of Fig. 6, since the transmission and reception of data are simultaneously achieved, it is possible to reduce the transmission time. On the other hand, it was necessary for the semi-dual transmission system to reduce the transmission rate and make the multiplication by using the frequency division system to achieve the simultaneous two-directional transmission. Otherwise, it was necessary to provide two transmission lines for the transmission use and the reception use respectively. However, according to the example of Fig. 6 the same carrier can be utilized for the transmission/reception, and the telephone line may be only one without reducing the transmission rate thereby providing a low cost system.

Of course, this circuit example becomes a television telephone system by adding an additional telephone line as shown by dotted line in Fig. 6. The circuit constitution of this example is for the image communication, however the circuit is applicable for a data communication due to MODEM or the like.

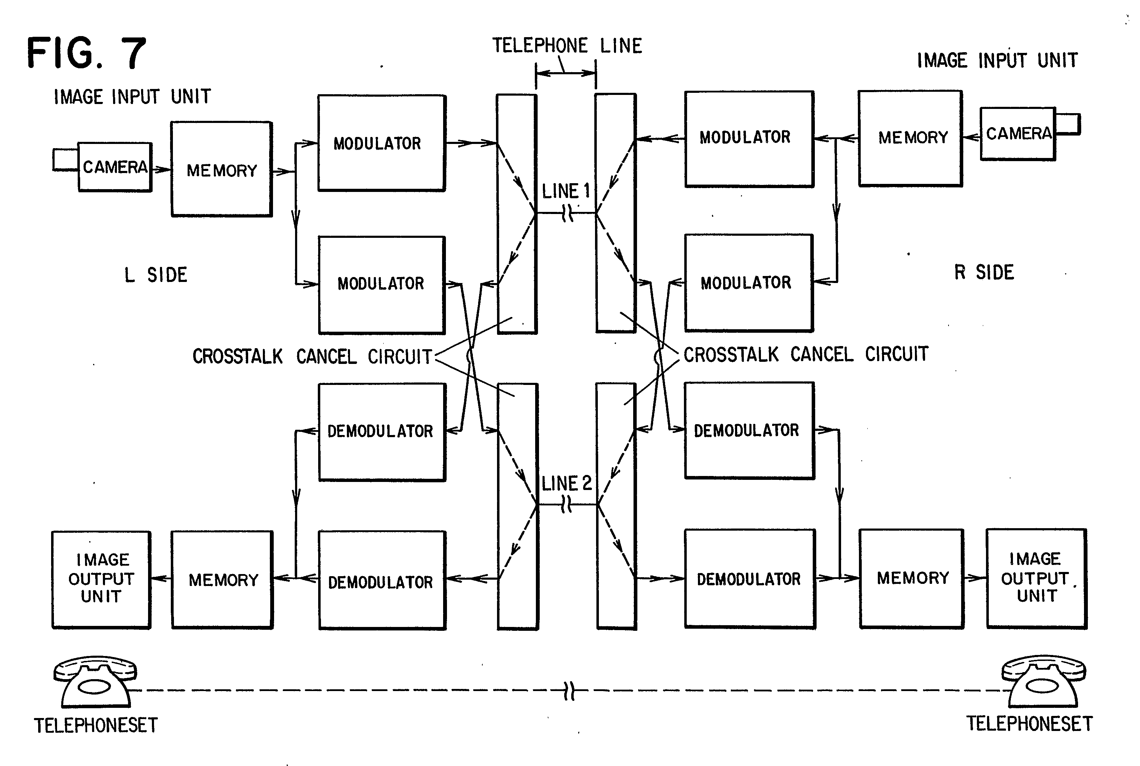

Fig. 7 shows an example in which a high transmission more than the example of Fig. 6 is necessary. In this example two telephone lines are used in parallel, and if more high transmission is required, many telephone lines may be used. This example is also for the transmission system of the image data, but it is necessary for the transmission of the image provided by a camera, since there is a limit in the transmission frequency range, to once memorize the image data from the camera in the memory means such as a memory or the like, and then read out at the signal rate suitable for the transmission due to the telephone line, to transmit the image data. At this time, if for example two telephone lines are used and each telephone line transmits the half of the data read out in each telephone line, it is possible to transmit data of two times within the same time, even though the transmission time is the same for each telephone line. As a result, the transmission rate is increased in two times. At the reception side, the signals transmitted by the plural telephone lines are decoded respectively, the decoded data is synthesized and memorized in the memory and read out with a suitable reading rate to display it on an image displaying unit. Also in this example, if a telephone line as shown by the dotted line in Fig. 7 is added thereinto, it becomes a television telephone system as is similar to that in Fig. 6.

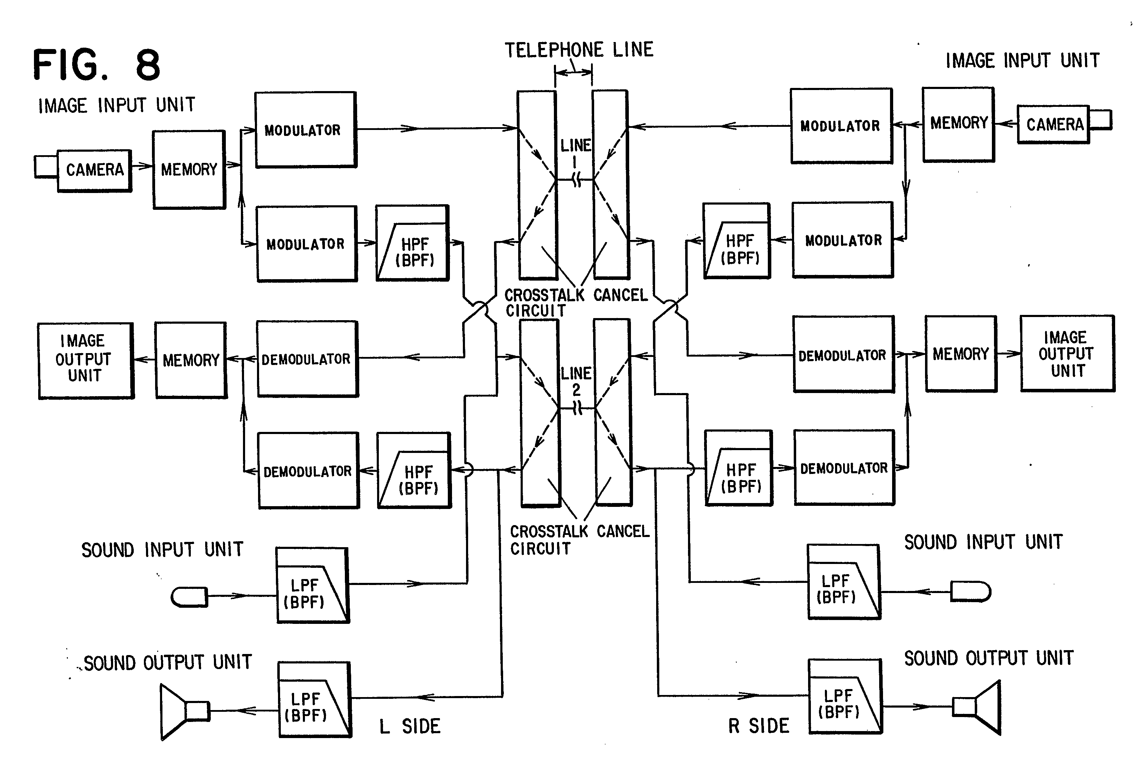

Fig. 8 shows an example of a transmission system in which sound signals for the telephone call are made multiplication by a frequency division communication system, as an application example of Fig. 7. In the communication of image data, it is possible for increasing a transmission rate to set the carrier frequency to about the upper limit of the usable frequency range for the transmission line, and to make the using frequency band narrow by the SSB system. In the case where the frequency of e.g. 2 KHz - 3.4 KHz is used for the image data, if the crosstalk cancelling circuit of the present invention is used, the simultaneous transmission/reception communication becomes possible with the same carrier frequency, thereby enabling the communication of other data by using the frequency band below 2 KHz.

In Fig. 8, the frequency band is used for communication of sound signals in the telephone set. In this example, the telephone line 1 has no multiplication of sound signals and the telephone line 2 has the multiplication of sound signals, and it may be considered as an application example to transmit the sound signals in a stereo mode with the multiplication of both telephone lines 1 and 2. The above is applicable to the system using the telephone lines more than two, and it will be necessary in a meeting using the television telephone to provide multichannels for the sound signals. In the example of Fig. 8, a multiple transmission of the sound signals and image data is effected, therefore it is not necessary to use the additional telephone line as shown in Figs. 6 and 7, thereby reducing the cost. However, on the other hand there is a disadvantage that since the multiplication is achieved by using the frequency division communication system, clearness of the sound signals is deteriorated.

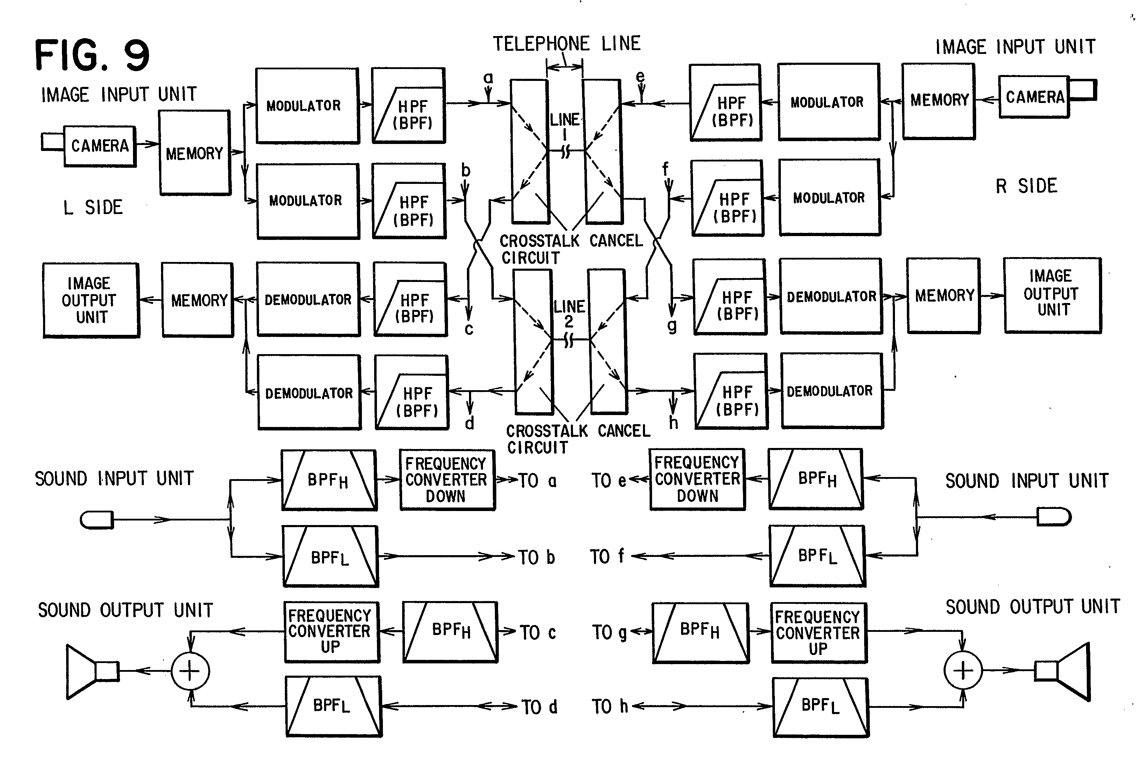

Fig. 9 shows the example for solving the above-mentioned disadvantage, in which there are used two or more than telephone lines to increase the transmission rate. In the example, the clearness of the sound is improved by that when there are frequency bands which are not used on the respective lines, the non-used frequency bands are used.

In the example of Fig. 9, if the image data is transmitted on the telephone lines 1 and 2 by using the frequency band of 2 KHz - 3.4 KHz as is similar to that of Fig. 8, the frequency band of 300 KHz - 2 KHz is not used on the lines 1 and 2 respectively. The sound signals are transmitted by utilizing the unused frequency band, but the sound signal having the frequency of 300 Hz - 3.4 KHz can not be transmitted even by using the frequency band of 300 Hz ⁻ 2 KHz on the telephone lines.

Under the circumstance, the frequency band of 300 Hz -3.4 KHz on which a sufficient clearness of sound can be obtained, is divided into a high band and a low band by using filters. According to the example of Fig. 9, the frequency band is divided into two bands, since the example uses two telephone lines. The number of division can be set in accordance with the number of the used telephone lines or the width of the unused bands on the respective lines. In the case of two division, if the frequency at which the band is divided is set to 1 KHz, a high band becomes one of 300 Hz - 1 KHz and a low band becomes one of 1 KHz - 3.4 KHz. The signal in the low band is transmitted on the line 2. On the other hand, since the signal in the high band is within the frequency of 1 KHz - 3.4 KHz, if the signal is transmitted on the line 1, the sound signals are undesirably superimposed with the image signals. Then, the high band is further made 1/2 by using a frequency shift-down circuit. By this method, the frequency signal of 1 KHz - 3.4 KHz is converted into the frequency signal of 500 Hz - 1.7 KHz, therefore it becomes possible to transmit the sound signals together with the image data signals.

At the reception side, the received sound signals on the low band of 300 Hz - 1 KHz through the telephone line 2 is derived from the filter, and the filtered signals are synthesized with the other sound signals thereby obtaining the simultaneous two-directional communication of the sound signals and the image data signals within the band of 300 Hz - 3.4 KHZ. The above-mentioned other sound signals are generated by converting the high frequency band of sound signals of 500 Hz - 1.7 KHz transmitted through the telephone line 1 into the frequency band of two times i.e. 1 KHz - 3.4 KHz by using a shift-up circuit. The frequency at which the band is divided is not limited to the above-mentioned 1 KHz, and further the shift-down and the shift-up frequencies are not also limited to the above-mentioned 1/2 and 2 respectively. Those frequencies may be decided in accordance with the actually used telephone lines and the unused frequency band.

It is considered for increasing a utilization efficiency of the transmission line ① to increase a transmission rate and ② to make possible an entire dual communication rather than a half communication. It is considered for the television telephone system that since it is necessary to transmit the sound signals for the telephone call, the sound signals should be transmitted together with the image data signals by using the frequency division system for the sound signals. In an actual conversation on the telephone, it is quite rare to continue the conversation without any interval in time, therefore it is possible to more increase the utilization efficiency of the transmission line by detecting the time interval in which the conversation is interrupted and utilizing the time interval for the transmission of the image data signals through the frequency band used for the sound signals.

Fig. 10 is a block diagram for realizing the above, and the simultaneous two-directional communication is achieved by using a crosstalk cancelling circuit. The method per se is applicable to the multiple transmission of the sound signals for conversation and the image data, and further usable for the cases of one telephone line or two or more numbers of the lines, and of a wire system or a wireless system.

The example of Fig. 10 is constituted for the purpose of the television telephone, and the simultaneous two-directional communication for both sound and image signals can be achieved with only one telephone line by utilizing the frequency division system. When the user is in the conversation, the sytem operation is the same as the normal multiple communication using the frequency division system, however when the conversation is interrupted, the respective terminal device detects as to whether the user is now speaking or not, and any signal or data representing the detected status is transmitted to the opposite terminal device. In the case where the telephone line is utilized as a transmission line, the usable frequency band is 300 Hz -3.4 KHz. If the frequency band of 400 Hz - 1.5 KHz is used for sound signals (for conversation) and 2 KHz - 3 KHz is used for image data signals (as shown in Fig. 11), it is possible for the signal (or data) for transmitting the detected status mentioned above ① to use the signal having the frequency of 1.75 KHz between both frequencies, ② to use the signal having the frequency of 350 Hz between the lower limit 300 Hz in the usable transmission frequency band and the lower limit 400 Hz in the usable sound signal, ③ to use the signal having the frequency of 2 KHz between the upper limit 3 KHz in the usable frequency and the upper limit 3.4 KHz in the usable image signal. Thus, the respective terminal devices can detect the status signal showing the fact that the sound signal is interrupted at both terminal devices, therefore at that time the transmission for the image data signal can be achieved through the frequency band used for the sound signal by switching the switches S1 and S2 provided in the respective terminal devices. Of course, the carrier frequency used at that time is within the band 400 Hz - 1.5 KHz, therefore the transmission rate becomes also lower than that of the image data signal of 2 KHz - 3 KHz. In the case of the television telephone, the image data to be transmitted is once memorized, and the write/read operation can be accessible at random, therefore the detected signal can be controlled by CPU.

It is possible to achieve a high precision operation of the system in which the detected signals for providing the automatic balanced condition is controlled by the CPU, in comparison with the case using the manual operation or semi-fixed resister.

The operation speed required for CPU controlling the transmission system through the telephone line is sufficient with about 8 bits. During no conversation at both terminal devices, the transmission utilizing both of the frequency band for image data signal and the frequency band for sound signal is achieved. As mentioned above, the access to the memory can be effected at random, therefore if the memory has 0 to 100 addresses for the image data, it may be possible to transmit from the data stored in the 0 address in the image data band and to transmit from the data stored in the 100 address in the sound signal band.

During the operation mentioned above, if either of terminal devices detects the fact that either user again starts the conversation, each terminal device can detect such status by the detected signal of the data. At that time the each terminal device is returned back to the normal condition.

At that time, the usable condition for the conversation is achieved after the operation switch has been effected, therefore the sound input signal is delayed by using BBD circuit or the like as shown in Fig. 10. By this the sound due to the speaker is transmitted to the opposite side, and it is sufficient for the normal operation to set the delay time as below about 100 ms. A mute circuit located at the sound output unit is provided for the purpose of preventing the output of the sound signal, since the image data signals are transmitted even in the frequency band for the sound signals. According to the example, there is provided a method of transmitting the image data signals when the frequency band for the sound signals is not used. However, on the other hand, when the image data signals to be transmitted are little, namely when the image obtained by a television camera in the television telephone is not changed, in other words the image is not moved in comparison with each image, it is sufficient to transmit only the data concerning the difference between the previous image and the current image. According to such transmission system, the image data to be necessary for transmission becomes little thereby enabling the transmission rate at low level. Furthermore, the modulation rate in the modulation necessary to transmit the image data on the telephone line may be reduced and the transmission frequency band may be also reduced. By this, the high frequency band limited for the sound signals may be increased, and the high band of the sound signal can be transmitted thereby improving the clearness of the sound. Furthermore, if the above two method are combined, the utilization efficiency of the transmission line is remarkably increased and further there is presented a transmission system with high fidelity sound and high speed. The above-mentioned switching operation may be effected manually, and automatically by utilizing the CPU by means of detecting the amount of image data to be necessary for the transmission by the comparison of the data stored in the memory and the conversation condition.

According to the above examples, the switching operation is effected by detecting the terminal status on both ends, however it may be possible to switch on the basis of the status of either one terminal device and also to decide the operation condition of the opposite terminal device.

The switches S1 and S2 in Fig. 10 are illustrated merely for explaining, and they are in actual electronic switches composed of such as CPU.

The examples shown in Figs. 6 to 10 can be applicable for the wire type system, the wireless type system or the like.

## Claims

1. A cancelling circuit characterized by a bridge circuit in which a balanced condition is provided in an entire frequency band usable for a wire transmission line or a portion thereof, and a simultaneous two-directional communication is enabled by using the same frequency or the frequency adjacent thereto.

2. A cancelling circuit according to Claim 1, wherein said bridge circuit is composed of a frequency characteristic compensating circuit and a phase shifting circuit, and said bridge circuit compensates the influence due to the impedance change of the transmission line and an unbalanced condition due to the circuit element per se, thereby providing a relative balanced condition.

3. A transmission system characterized in that there are provided cancelling circuits at both terminal devices opposite to each other through a transmission line, and said cancelling circuit is composed of a bridge circuit in which a balanced condition is provided in an entire frequency band usable for a wire transmission line or a portion thereof, and a simultaneous two-directional communication is enabled by using the same frequency or the frequency adjacent thereto.

# FIG. 1

POINT A  POINT B

Vi

600Ω  600Ω:600Ω  T

C

TO 600Ω TELEPHONE LINE

Rb

Ra

Vo

Ra = Rb

# FIG. 2

Vi

TO 600Ω TELEPHONE LINE

AMPLITUTE COMPENSATION CIRCUIT

PHASE COMPENSATION CIRCUIT

PHASE COMPENSATION CIRCUIT

Vo

# FIG. 3

AMPLITUDE COMPENSATION CIRCUIT

PHASE COMPENSATION CIRCUIT

DIFFERENTIAL AMPLIFICATION CIRCUIT (Vb2 − Va3)

# FIG. 4(4-I)

EP 0 321 153 A2

# FIG. 4 (4-2)

EP 0 321 153 A2

EP 0 321 153 A2

FIG. 5

# FIG. 6

CROSSTALK CANCEL CIRCUIT  CROSSTALK CANCEL CIRCUIT

L SIDE  R SIDE

EP 0 321 153 A2

# FIG. 7

TELEPHONE LINE

IMAGE INPUT UNIT

IMAGE INPUT UNIT

L SIDE

R SIDE

CAMERA → MEMORY → MODULATOR

MODULATOR ← MEMORY ← CAMERA

MODULATOR

MODULATOR

LINE 1

CROSSTALK CANCEL CIRCUIT

CROSSTALK CANCEL CIRCUIT

DEMODULATOR

DEMODULATOR

LINE 2

IMAGE OUTPUT UNIT ← MEMORY ← DEMODULATOR

DEMODULATOR → MEMORY → IMAGE OUTPUT UNIT

TELEPHONESET

TELEPHONESET

EP 0 321 153 A2

FIG. 8

FIG. 9

Image-dominant technical figure. Labels include: IMAGE INPUT UNIT, CAMERA, MEMORY, MODULATOR, HPF (BPF), TELEPHONE LINE, LINE 1, LINE 2, CROSSTALK CANCEL CIRCUIT, DEMODULATOR, IMAGE OUTPUT UNIT, SOUND INPUT UNIT, BPFH, BPFL, FREQUENCY CONVERTER DOWN, FREQUENCY CONVERTER UP, SOUND OUTPUT UNIT, R SIDE, L SIDE, with signal labels a, b, c, d, e, f, g, h and TO a, TO b, TO c, TO d, TO e, TO f, TO g, TO h.

# FIG. 10

IMAGE INPUT UNIT

TELEPHONE LINE

IMAGE INPUT UNIT

CAMERA

CAMERA

| MEMORY | MODULATOR | HPF (BPF) |

a

c

| HPF (BPF) | MODULATOR | MEMORY |

IMAGE OUTPUT UNIT

| MEMORY | DEMODULATOR | HPF (BPF) |

b

d

| HPF (BPF) | DEMODULATOR | MEMORY |

IMAGE OUTPUT UNIT

SOUND INPUT/ OUTPUT UNIT CONTROLLER

CROSSTALK CANCEL CIRCUIT

SOUND INPUT/ OUTPUT UNIT CONTROLLER

| CONTROL UNIT | ACKNOWLEDGE SIGNAL DETECT |

| ACKNOWLEDGE SIGNAL DETECT | CONTROL UNIT |

SWITCH

$S_1$

$S_2$

| MODULATOR | LPF (BPF) |

| LPF (BPF) | MODULATOR |

| DEMODULATOR | LPF (BPF) |

| LPF (BPF) | DEMODULATOR |

SOUND INPUT/ OUTPUT UNIT

| AMP | DELAY | LPF (BPF) | → TO a

TO c ← | LPF (BPF) | DELAY | AMP |

SOUND INPUT OUTPUT UNIT

| AMP | MUTE CIRCUIT | LPF (BPF) | ↔ TO b

TO d ↔ | LPF (BPF) | MUTE CIRCUIT | AMP |

EP 0 321 153 A2

# FIG. 11

SPECTRUM

0.4K  1.5K  2K  3K  f

② 0.35K  ① 1.75K  ③ 3.2K

EP 0 321 153 A2